# EUROPEAN PATENT SPECIFICATION

(11) **EP 1 492 436 B1**
(45) Date of publication and mention of the grant of the patent: **21.06.2006**
(21) Application number: 03715293.1
(22) Date of filing: 27.03.2003
(51) Int. Cl.: A47J 27/12, A47J 37/12

(54) **COOKING APPLIANCE AND METHOD PARTICULARLY USEFUL FOR DEEP-FRYING FOOD ARTICLES**
GARGERÄT UND VERFAHREN, DIE SICH BESONDERS ZUM FRITIEREN VON NAHRUNGSMITTELN EIGNEN
APPAREIL DE CUISSON ET PROCEDE PARTICULIEREMENT ADAPTE A LA GRANDE FRITURE D'ALIMENTS

(30) Priority: 11.04.2002 US 371429 P
(43) Date of publication of application: 05.01.2005
(73) Proprietor: AAC Trade Ltd., New York, NY 10001 (US)
(72) Inventor: LAVI, Josef, Fort Lee, NJ 07024 (US); COHEN, Eli, 42 810 Lev HaSharon (IL)
(74) Representative: Modiano, Micaela Nadia
(86) International application number: PCT/IL2003/000258
(87) International publication number: WO 2003/086156

(56) References cited:
- EP-A- 0 067 730
- DE-U- 6 812 665
- US-A- 3 613 553
- US-A- 4 444 095
- US-A- 6 058 245
- US-A1- 2002 092 427
- US-B1- 6 363 834

## Description

The present invention relates to a cooking appliance and a cooking method particularly useful for deep-frying food articles, such as potatoes, chicken parts, and the like, in a cooking oil.

When potatoes or other food articles to be deep-fried are immersed in a quantity of hot oil, the cold food articles produce an immediate drop in the temperature of the hot oil. In addition, the food articles, such as potatoes, are generally cut into sticks or slices just before being immersed in the hot oil such that they contain a water film on their outer surfaces. The difference in temperature between the food articles and the hot oil at the instant of contact of the food articles with the hot oil when immersed therein, and also the presence of a water film on the outer surfaces of the food articles, have the effect of reducing the crispiness of the food articles produced in the deep-frying process, as well as increasing the amount of oil absorbed by the food articles during the deep-frying process. A cooking appliance according to the preamble of independent claim 1 is known from US-A-6 058 245.

### OBJECTS AND BRIEF SUMMARY OF THE PRESENT INVENTION

An object of the present invention is to provide a cooking appliance particularly useful for deep-frying food articles and having advantages in one or both of the above respects. Another object of the invention is to provide a cooking appliance suitable for other uses other than deep-frying; and a further object is to provide a method of deep-frying food articles having advantages in one or both of the above respects.

According to one aspect of the present invention, there is provided a cooking appliance particularly useful for deep-frying food articles, comprising: a receptacle having a bottom wall, a side wall, and an open top, for receiving food articles and a quantity of an oil for deep-frying the food articles therein; a lower electrical heater body within the receptacle adjacent to its bottom wall for immersion within the quantity of oil when received in the receptacle; and an upper electrical heater body movable with respect to the receptacle and the lower electrical heater body therein, to (a) an inoperative position permitting the introduction and removal of food articles via the open top; and (b) an operative position spaced above the lower electrical heater body to permit accelerated heating of the quantity of oil when received within the receptacle.

In several described preferred embodiments, the cooking appliance further comprises a lid for covering the open top of the receptacle; the upper electrical heater body being carried by the lid and being movable therewith to the inoperative position of the upper electrical heater body. In one embodiment, the lid with the upper electrical heater body is removably attachable to the receptacle; and in a further described embodiment, the lid together with the upper electrical heater body is pivotally mounted to the receptacle.

According to further preferred features in the described embodiments, the cover further includes a reflector backing the upper electrical heater body for reflecting the heat therefrom into the receptacle when the upper electrical heater body is energized. In the described preferred embodiments, the upper electrical heater body and reflector are of annular configuration, and the lid includes a light-transparent section centrally of the upper electrical heater body and reflector to permit viewing the contents of the receptacle while the lid covers the open top of the receptacle.

A still further embodiment is described wherein the upper electrical heater body is pivotally mounted within the receptacle to the operative position wherein it is oriented to extend horizontally parallel to and spaced above the lower electrical heater body, or to the inoperative position wherein it is oriented to extend vertically with respect to the receptacle.

According to a further aspect of the invention, there is provided a method of deep-frying food articles, particularly potatoes, according to independent claim 16.

Further features and advantages of the invention will be apparent from the description below.

### BRIEF DESCRIPTION OF THE DRAWINGS

The invention is herein described, by way of example only, with reference to the accompanying drawings, wherein:
Fig. 1 is a three-dimensional view illustrating one form of cooking appliance constructed in accordance with the present invention wherein in the upper electrical heater body is carried by a removable lid;
Fig. 2 illustrates the cooking appliance of Fig. 1 with the lid removed;
Fig. 3 illustrates the cooking appliance of Fig. 1 when used for pre-heating food articles before immersing them in the hot frying oil;
Fig. 4 illustrates the cooking appliance of Fig. 1 when used for accelerated deep-frying the food articles by immersing them in the hot frying oil and energizing both electrical heater bodies;
Fig. 5 illustrates the cooking appliance of Fig. 1, without the lid and provided with a removable heat-resistant plate to enable the appliance also to be used for boiling food articles;
Fig. 6 schematically illustrates another cooking appliance constructed in accordance with the present invention wherein the upper electrical heater body is pivotally mounted within the receptacle, rather than being carried by the removable lid;
Fig. 7 is a three-dimensional view illustrating another cooking appliance constructed in accordance with the present invention wherein the upper electrical heater body is carried by a pivotal lid;
Fig. 8 is a longitudinal sectional view of the cooking appliance of Fig. 7 with the lid in its closed position overlying the food article basket, and with the handle of the food article basket removed;
Fig. 9 is a three-dimensional view illustrating the lower electrical heater body in the cooking appliance of Figs. 7 and 8;
Fig. 10 is a three-dimensional view illustrating the food article basket with the handle detached; and
Fig. 11 illustrates the food article basket of Fig. 10 but with the handle attached.

It is to be understood that the foregoing drawings, and the description below, are provided primarily for purposes of facilitating understanding the conceptual aspects of the invention and various possible embodiments thereof, including what is presently considered to be preferred embodiments. In the interest of clarity and brevity, no attempt is made to provide more details than necessary to enable one skilled in the art, using routine skill and design, to understand and practice the described invention. It is to be further understood that the embodiments described are for purposes of example only, and that the invention is capable of being embodied in other forms and applications than described herein.

### DESCRIPTION OF PREFERRED EMBODIMENTS

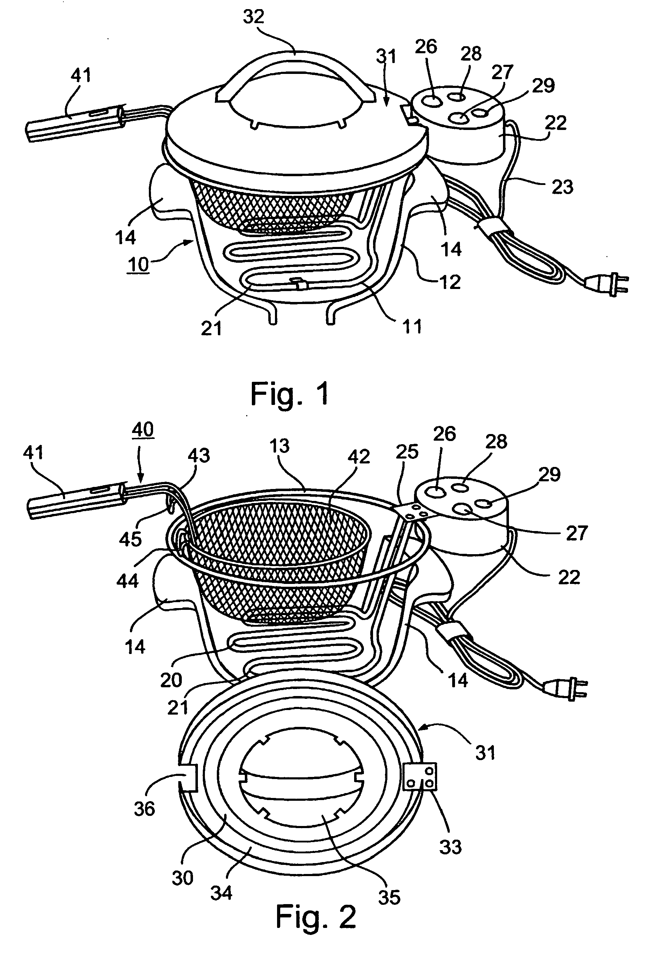

The cooking appliance illustrated in Figs. 1 - 4 includes a receptacle, generally designated 10, having a bottom wall 11, a side wall 12, and an open top defined by the upper rim 13 of the side wall, for receiving food articles such as potato sticks or slices to be deep-fried, and a quantity of oil for deep-frying the food articles. Preferably, receptacle 10 is made of a transparent material to permit viewing the food articles therein. The upper rim 13 of receptacle 10 is provided with a pair of finger grips 14 to facilitate handling the receptacle; and the bottom wall 11 is provided with a plurality of feet 15 to permit the receptacle to be supported on a flat horizontal surface.

The illustrated cooking appliance further includes two electrical heater bodies. One electrical body, generally designated 20, includes a heater coil 21 to be disposed within the receptacle 10 adjacent to its bottom wall 11 so as to be immersed within the frying oil. The other electrical heater body 30 is disposed within a lid 31 removably receivable over the open top of the receptacle, as described more particularly below.

The lower electrical heater body 20 further includes a housing 22 connectable by an electrical cable 23 to a power supply outlet for supplying electrical power to the heater coil 21 via a vertically-extending conduit 24. The lower electrical heater body 20 is a separate unit removably attachable to the receptacle 10 by resting the juncture between the housing 22 and the vertically-extending conduit 24 on the rim 13 of the receptacle side wall 12.

Housing 22 of the lower electrical heater body 20 further includes a horizontally-extending socket 25 for electrically connecting the upper electrical heater body 30 within the lid 31, to the electrical power supply via cable 23. Housing 22 further includes On/Off switches 26 and 27 for selectively supplying electrical power to the lower electrical heater body 20 and to the upper electrical heater body 30 within the lid 31, as will be described more particularly below. A light indicator 28, 29 is provided adjacent each switch 26, 27, to indicate whether its respective electrical heater body is energized.

Lid 31 has a manually-graspable handle 32 for applying or removing the lid with respect to the upper open end of the receptacle 10. The upper electrical heater body 30 is of annular configuration (Fig. 2) and is carried by the inner surface of the lid 31. The lid further includes a plug 33 depending from one side of the lid for insertion into the electrical socket 25 of the lower electrical heater body 20 to energize the upper electrical heater body 30.

The inner surface of lid 31 is formed as a heat-reflector surface 34 for reflecting the heat from the upper electrical heater body 30 into the interior of the receptacle 10. Reflector 34 is also of annular configuration, and the central region 35 of the lid is transparent to permit the interior of the receptacle to be viewed through the lid when applied over the receptacle. Lid 31 is further formed with a slot 36 at one side for accommodating the article holder 40, as described below.

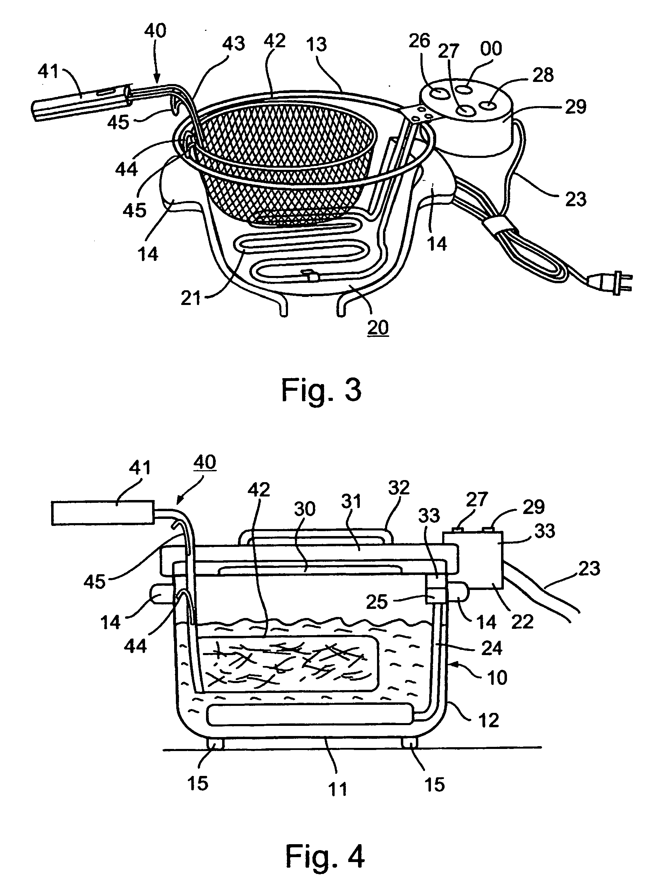

Article holder 40 is formed with a handle 41 at one end, and an oil-permeable wire basket 42 at the opposite end for receiving the food articles, e.g., potato sticks, to be fried. A downwardly-bent juncture portion 43 between handle 41 and the wire basket 42 is formed with a lower hook 44 engageable with the rim 13 of the receptacle 10 for supporting the wire basket 42 elevated above the quantity of oil in receptacle 10 as shown in Fig. 3, and an upper hook 45 for supporting the wire basket in a lower position immersed within the oil in the receptacle as shown in Fig. 4.

The cooking appliance illustrated in Figs. 1- 4 is used in the following manner:

The frying oil is poured into the receptacle 10 to a level as shown in Fig. 4, and is heated to the frying temperature by energizing the lower electrical heater body 20. If accelerated heating is desired, the lid 31 may be applied over the open end of the receptacle, with its plug 33 received within socket 25 of the lower electrical heater body 20 to energize also the upper electrical body 30 within the lid.

After the oil has been heated to the required temperature, the lid 31 is removed, and the freshly-cut food articles to be fried, e.g., potato sticks, are received within basket 42 of the article holder 40. The article holder 40 is then applied with its lower hook 44 received over the rim 13 of the receptacle 10 to thereby space the wire basket, and the potato sticks therein, slightly above the hot oil within the receptacle 10 for pre-heating the potato sticks, and also for partially drying the moist surfaces of the freshly-cut potato sticks.

After the potato sticks have been thus pre-heated and partially dried, the article holder 40 is then moved to apply the upper hook 45 over the rim 13 of the receptacle 10, to immerse the wire basket 42, and the potato sticks therein, within the hot oil in the receptacle for deep-frying the potato sticks. To accelerate the deep-frying of the potato sticks, lid 31 may be re-applied over the upper end of the receptacle with plug 33 of the lid received within socket 25 of the lower electrical heater body 20, to thereby enable energizing also the upper electrical heater body 30 within the lid by depressing both switches 26 and 27.

After the deep-frying of the potato sticks in the wire basket 42 has been completed, lid 31 is removed with its upper heater body 30, and the wire basket is raised with its lower hook 44 again applied over rim 13 of the receptacle, such that the potato sticks within the wire basket 42 are again supported spaced above the hot frying oil within the receptacle to permit draining of the oil from the potato sticks back into the receptacle. The fried potato sticks may then be removed from the wire basket 42.

The cooking appliance illustrated in Figs. 1- 4 may thus be used to deep-fry potato sticks or other food articles in a much shorter period of time than in a conventional appliance. Moreover, the pre-heating of the food articles, and the partial drying of the outer surfaces of the food articles before immersing them into the hot oil, have been found to significantly enhance the crispiness of the fried articles and also to significantly reduce the amount of oil absorbed by the fried articles. Both of the above results are very desirable for taste and health purposes.

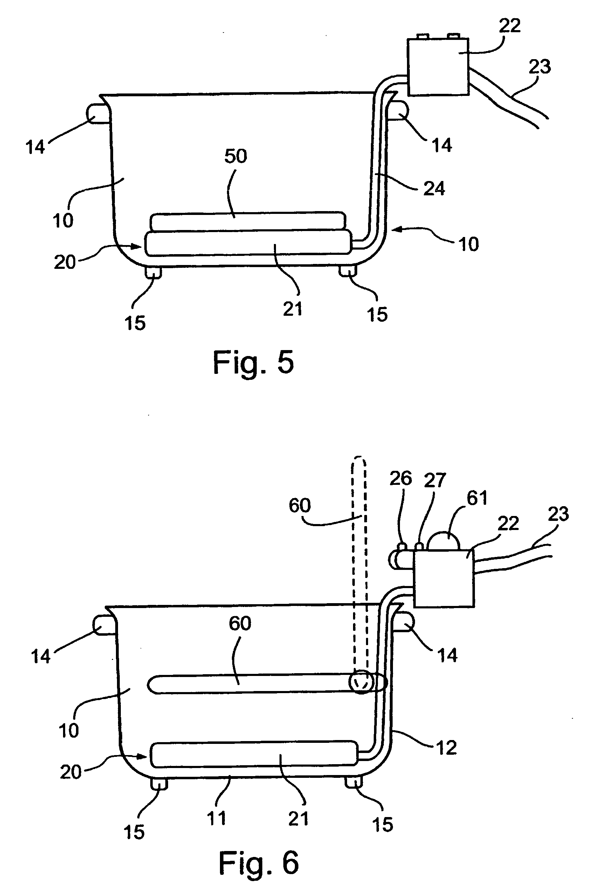

Fig. 5 illustrates the cooking appliance of Figs. 1 - 4 as further including a removable heat-resistant plate 50 supported on coil 21 of the lower electrical heater body 20 within the receptacle 10. The provision of such a heat-resistant plate 50 enables the cooking appliance also to receive another receptacle for boiling food articles in the other receptacle. The cooking appliance illustrated in Fig. 5 is otherwise the same as described above with respect to Figs. 1 - 4, and therefore its various parts are identified by the same reference numerals.

Fig. 6 schematically illustrates another embodiment of the invention wherein the upper electrical heater body, instead of being mounted within and removable with the removable lid 31, is pivotally mounted within the receptacle. Thus, as shown in Fig. 6, the upper electrical heater body, therein designated 60, is pivotally mounted within receptacle 10 to an operative position, shown in full lines, wherein it is oriented to extend horizontally parallel to and spaced above the heater coil 21 of the lower electrical heater body 20, or to an inoperative position, shown in broken lines, wherein it is oriented to extend vertically through the open top of the receptacle.

For purposes of pivoting the upper electrical heater body 60 to either of the above positions, the housing 22 for the lower electrical heater body 20 is provided with a rotary knob 61 coupled in any suitable manner, e.g., by a gear coupling (not shown), such that rotation of the knob in one direction pivots the upper electrical heater body 60 to its operative horizontal position, and rotating the knob in the opposite direction pivots the upper electrical heater body 60 to its vertical inoperative position.

Housing 22 also includes the electrical switches 26, 27 for selectively energizing the two electrical heater bodies 20, 60. It may also include an interlock which permits pivoting the upper electrical heater body to its vertical inoperative position only when it is de-energized. In all other respects, the electrical heater illustrated in Fig. 6 may be constructed and used in the same manner as described above with respect to Figs. 1-4 and Fig. 5.

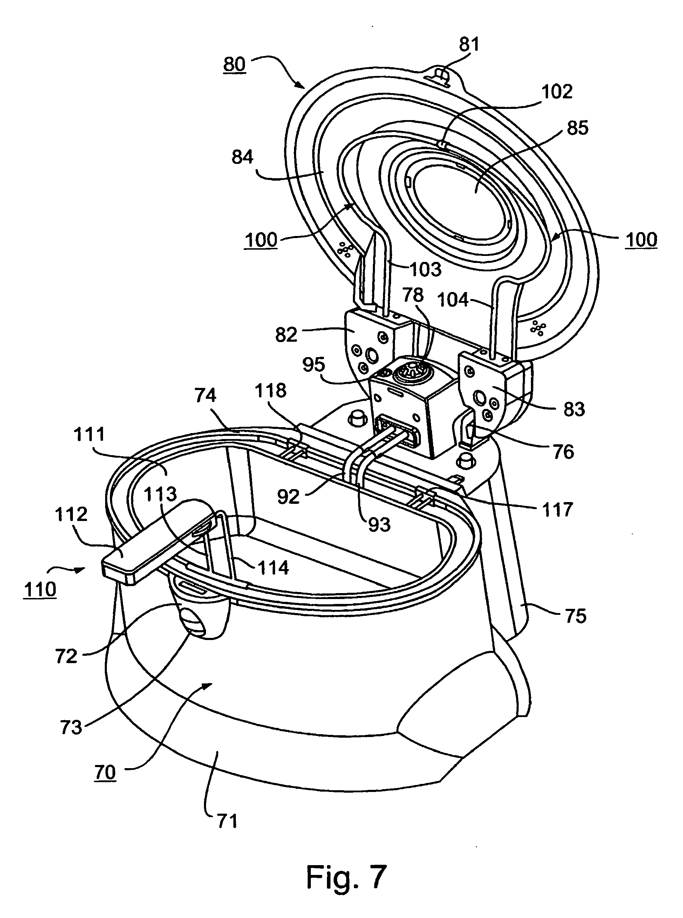

Fig. 7 - 11 illustrate a further cooking appliance constructed in accordance with the present invention, also including a receptacle, generally designated 70; a lid 80 overlying the open top of the receptacle; a lower electrical heater body 90 at the bottom of the receptacle; an upper electrical heater body 100 carried by the inner face of the lid; and a food article holder 110 for holding the food articles, e.g., potato sticks, to be fried. In this case, however, lid 80, together with the upper electrical heater body 100 carried by the lid, is pivotally mounted to the upper end of receptacle 70.

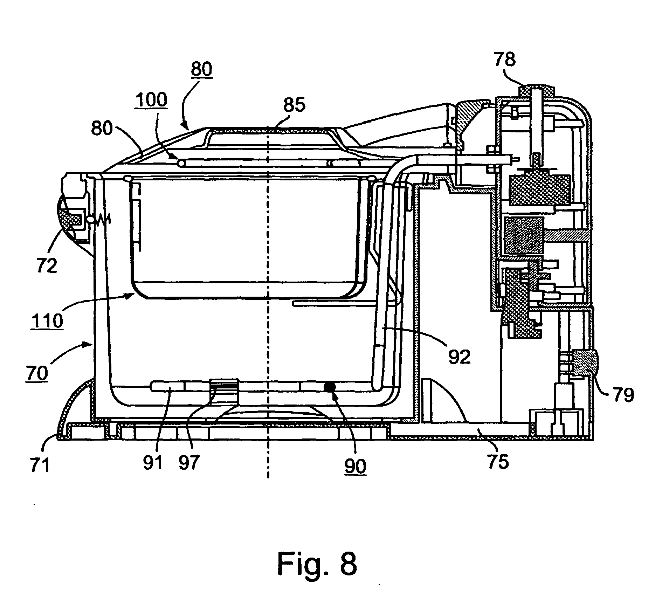

As shown particularly in Figs. 7 and 8, receptacle 70 is mounted on a base 71 for spacing the bottom of the receptacle above the supporting surface. Receptacle 70 is preferably made of metal and removably supported on base 71.

The upper open end of receptacle 70 is provided with a retainer socket 72 for receiving a leaf spring retainer 81 carried by the lid 80 in order to retain the lid in its closed position over the upper end of the container as shown in Fig. 8. Socket 72 includes a release button 73 which, when depressed, releases retainer 81 from the socket to permit the lid to pivot to its open position, as shown in Fig. 7.

Receptacle 70 includes an inner pot 74 for receiving the oil to be used in frying the food articles. Receptacle 70 is formed with a spine section 75 at the side thereof opposite to that of its retainer socket 72, for pivotally mounting lid 80 about an axis 76 at the upper end of the spine section 75. The upper end of spine section 76 further carries a housing 77 for one or more electrical controls, e.g., a temperature control knob 78. The appliance on/off switch is preferably carried on the outer wall of the spine section 75, as shown at 79 in Fig. 8.

Lid 80 is pivotally mounted to receptacle 70 about pivot axis 76 by a pair of arms 82, 83 straddling electrical housing 77 at the upper end of the receptacle spine section 75. The inner face of lid 80 carries a reflector 84 for reflecting the heat generated by the upper electrical heater 100 into the receptacle 70 when the lid is pivoted to its closed position as shown in Fig. 8. The central section 85 of lid 80 is preferably made of transparent glass to permit viewing the interior of the receptacle when the lid is closed.

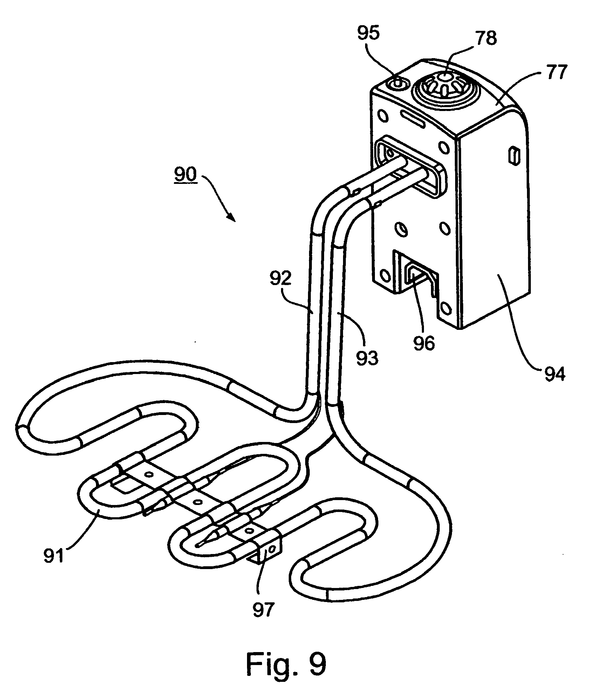

The lower electrical heater body 90 located within receptacle 70, more particularly at the bottom of the oil pot 74 as shown in Fig. 8, is best seen in Fig. 9. It includes a sinuous coil 91 connected at its opposite ends by a pair of conductor rods 92, 93 to the electrical connections within the spine section 75 of receptacle 70. Spine section 75 may include a removable panel 94 to provide access to the electrical elements within that section.

The upper end of spine section 75 includes, in addition to the temperature control knob 78, also an indicator lamp 95 to indicate when the lower electrical heater body 90 is energized. The lower end of spine section 74 carries a pair of connector terminals 96 for providing electrical connection to the upper electrical heater body 100 carried by the lid 80. The sinuous coil 91 of the lower electrical heater body 90 is secured within pot 74 by a clip 97.

As shown particularly in Fig. 7, the upper electrical heater body 100 includes an electrical coil 101 secured to the inner face of reflector 84 by one or more clips 102. Coil 101 is connected to the electrical power supply via a pair of parallel conductor rods 103, 104 passing through the two arms 82, 83 into engagement with the connector terminals 96 at the lower end of the receptacle spine section 75.

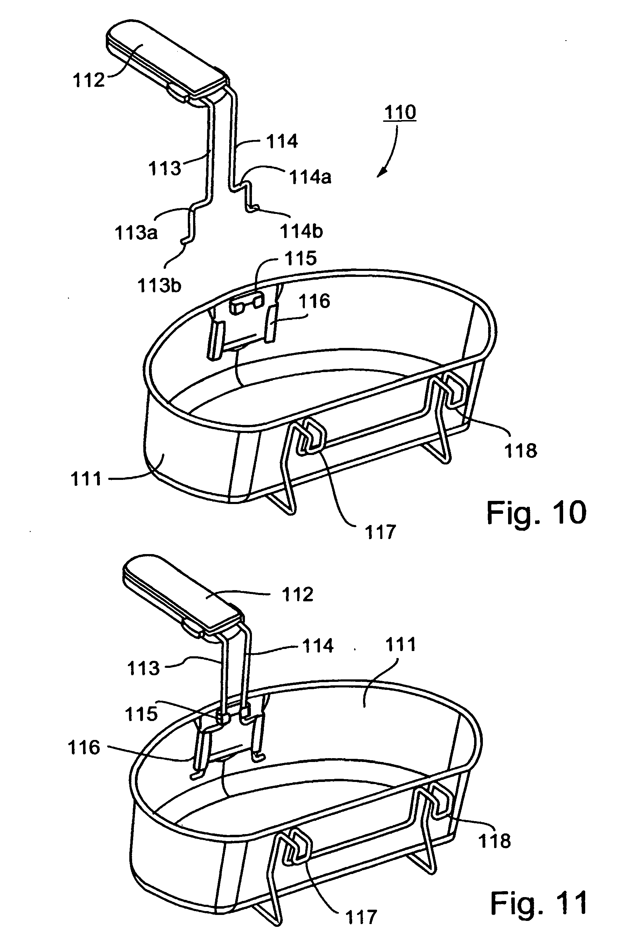

The food article holder, generally designated 110, is best seen in Figs. 10 and 11. It includes an oil permeable basket 111 for holding food articles to be fried, and basket supporting means for selectively supporting the basket either in an upper position spaced over the quantity of oil within the receptacle, or in a lower position immersing the basket and the food articles therein within the quantity of oil, as described above with respect to Fig. 4. However, instead of providing two hooks (44, 45, Fig. 4) for this purpose, a different arrangement is used.

Thus, as clearly shown in Figs. 10 and 11, the food article holder 110 includes, in addition to the wire basket 111, a handle 112 quickly-detachable from the food basket 111. When handle 112 is attached, it enables manipulating the basket as well supporting the basket in its lower position immersed within the oil in the receptacle. When detached from the wire basket, it enables the lid 80 to be pivotted to its fully closed position over the receptacle.

Handle 112 includes a pair of depending spring arms 113, 114, each formed at its outer end with a pair of out-turned steps 113a, 113b and 114a, 114b, respectively. The inner surface of wire basket 111 is formed with a first pair of closely-spaced tabs 115 receiving the two arms 113, 114 and their respective out-turned steps 113a, 114a, and another pair of more widely-spaced tabs 116 for receiving the outer ends of the two arms and the respective out-turned steps 113b, 114b, as shown in Fig. 11.

Thus, handle 112 may be quickly attached to the wire basket 111 by squeezing the two arms 113, 114 towards each other and inserting them between the two pairs of tabs 115, 116; it may be quickly detached from the wire basket by again squeezing the two arms towards each other and removing them from the tabs.

The opposite side of basket 111 is formed with a pair of outwardly-extending wire hooks 117, 118, for mounting the basket within the oil pot 74 in receptacle 70. This may be conveniently done by applying the hooks over the upper end of the rim of the oil pot, or receptacle. Preferably, that side of the oil pot 74, as well as of the receptacle 70, is flattened to accommodate spine section 75 as well as the hooks 117, 118 of the wire basket 111.

The manner of using the cooking appliance illustrated in Figs. 7 - 11 will be apparent from the above description. Assuming that the oil pot 74 contains the appropriate quantity of oil, the lower electrical heater body 90 may be energized to heat the oil. If accelerated heating is desired, lid 80 may be pivotted to its closed position and the upper electrical heater body 100 may also be energized.

After the oil has been heated to the required temperature, the freshly-cut food articles to be fried, e.g., potato sticks, are placed within the wire basket 111 while the handle 112 is attached; lid 80 is pivotted to its open position: and the wire basket is then moved to the upper end of the oil pot 74 and hooked thereon by the hooks 117, 118. The hooks 117, 118 are so located with respect to the oil pot so as to support the basket in its upper position above the hot oil within the oil pot. Thus, the hot oil within the oil pot pre-heats the food articles and also partially dries their outer surfaces if moist because of having been freshly-cut, e.g., in the case of potato sticks or slices. If desired, this pre-heating may be effected with the handle 112 removed and the lid closed.

After the food articles have thus been pre-heated and partially dried, handle 112 is re-attached to basked 111 (if previously removed), and the basket is lowered into the oil within the oil pot 74 until the handle 112 limits against the upper rim of the oil pot or of the receptacle 70. In this lowered position of the basket, it is immersed within the oil in the oil pot for deep-frying the articles in the basket. If accelerated frying is desired, the lid 80 may pivotted to its closed position and the upper electrical heater body 100 energized.

After the articles have thus been fried, handle 112 may be used for raising the basket 111 out of the oil and attaching clips 117, 118 of the basket to the rim of the oil pot or receptacle, to enable drainage of the oil from the articles within the basket. The fried food articles may then be removed from the basket.

While the invention has been described with respect to several preferred embodiments, it will be appreciated that these are set forth merely for purposes of example, and that many other variations, modifications and applications of the invention may be made within the scope of the appended claims.

## Claims

1. A cooking appliance particularly useful for deep-frying food articles, comprising : a receptacle (10) having a bottom wall (11), a side wall (12), and an open top (13), for receiving food articles and a quantity of oil for deep-frying the food articles therein; a lower electrical heater body (20) within said receptacle (10) adjacent to its bottom wall (11) for immersion within said quantity of oil when received in said receptacle; **characterised in that** it further comprises an upper electrical heater body (30) movable with respect to said receptacle, and said lower electrical heater body therein, to (a) an inoperative position permitting the introduction and removal of food articles via said open top; and (b) an operative position spaced above said lower electrical heater (20) body to permit accelerated heating of the quantity of oil when received within the receptacle.

2. The cooking appliance according to Claim 1, wherein said lower electrical heater body is disposed horizontally over said bottom wall of the receptacle; and wherein said cooking appliance further comprises a removable heat-resistant plate supported on said lower electrical heater body to enable the cooking appliance to receive another receptacle for boiling food articles therein.

3. The cooking appliance according to Claim 1 or 2, wherein the cooking appliance further comprises a lid selectively movable to cover or uncover said open top of the receptacle; said upper electrical heater body being carried by said lid and being movable therewith to said inoperative position of the upper electrical heater body.

4. The cooking appliance according to Claim 3, wherein said lid is removably mounted over, the open top of said receptacle and further includes an electrical plug receivable in a socket carried by said receptacle for energizing said upper electrical heater body when the lid is applied over the open top of said receptacle.

5. The cooking appliance according to Claim 4, wherein said lower electrical heater body is in the form of a separate unit removably received on the upper edge of the receptacle side wall and includes said socket for receiving said plug in said lid.

6. The cooking appliance according to Claim 3, wherein said lid is pivotally mounted over the open top of said receptacle.

7. The cooking appliance according to Claim 3, wherein said cover further includes a reflector backing said upper electrical heater body for reflecting the heat therefrom into said receptacle when the upper electrical heater body is energized.

8. The cooking appliance according to Claim 7, wherein said upper electrical heater body and said reflector are of annular configuration, and said lid includes a light-transparent section centrally of said upper electrical heater body and reflector to permit viewing the contents of the receptacle while the lid covers the open top of the receptacle.

9. The cooking appliance according to Claim 1 or 2, wherein the cooking appliance further comprises a food article holder including an oil permeable basket for holding food articles to be fried, and basket supporting means for selectively supporting said basket either in an upper position spaced over the quantity of oil within the receptacle, or in a lower position immersing the basket and the food articles therein within the quantity of oil.

10. The cooking appliance according to Claim 9, wherein said basket supporting means includes:
a handle for manually handling said basket;
a lower hook carried by said handle for supporting the basket in said upper position above said quantity of oil for pre-heating the food articles in the basket before immersing the basket and food articles therein within the quantity of oil; and
an upper hook carried by said handle for supporting the basket in said lower position immersing the basket and the food articles therein within the quantity of oil in the receptacle.

11. The cooking appliance according to Claim 1, wherein said upper electrical heater body is pivotally mounted within said receptacle to said operative position wherein it is oriented to extend horizontally parallel to and spaced above said lower electrical heater body, or to said inoperative position wherein it is oriented to extend vertically through the open top of said receptacle.

12. The cooking appliance according to Claim 11, wherein the cooking appliance includes a manual operator for manually pivoting said upper electrical heater body to said horizontal operative position or to said vertical inoperative position.

13. The cooking appliance according to Claim 11, wherein said lower electrical heater body is in the form of a separate unit removably received on the upper edge of the receptacle side wall and also includes said pivotal upper electrical heater body.

14. The cooking appliance according to Claim 9 or 14, wherein said basket supporting means includes a handle for manually handling said basket, said handle being dimensioned so as to be engageable with the open top of said receptacle to support said basket in said lower position; said basket supporting means further including one or more clips carried by said basket engageable with the open top of said receptacle for supporting said basket in said upper position.

15. The cooking appliance according to Claim 15, wherein said handle include a pair of spring arms engageable with a pair of spaced shoulders carried by said food article holder for selectively attaching or detaching said handle from said food article holder.

16. A method of deep-frying food articles, particularly potatoes, by using the appliance of claim 1 comprising:
pouring frying oil into the receptacle;
heating to the frying temperature by energezing the lower electrical heater body;
disposing said food articles in the oil-permeable basket ;
moving the upper electrical heater body to the inoperative position ;
suspending said basket and the food articles therein spaced over hot frying oil to preheat said food articles and to partially dry their outer surfaces; and
thereafter lowering said basket to immerse said food articles in said hot oil, to thereby produce deep-fried food articles having enhanced crispiness and reduced oil-absorption.

## Patentansprüche

1. Ein Gargerät, das sich insbesondere zum Frittieren von Nahrungsmitteln eignet und folgendes umfasst: einen Behälter (10), der eine Bodenwand (11), eine Seitenwand (12) und ein offenes Oberteil (13) aufweist, zum Aufnehmen von Nahrungsmitteln und einer Ölmenge zum Frittieren der Nahrungsmittel darin; einen unteren elektrischen Heizkörper (20) in dem Behälter (10) angrenzend an dessen Bodenwand (11) zum Eintauchen in der Ölmenge nach Aufnahme in den Behälter; **dadurch gekennzeichnet, dass** es ferner einen oberen elektrischen Heizkörper (30) umfasst, der relativ zu dem Behälter und dem unteren elektrischen Heizkörper darin beweglich ist zu (a) einer unwirksamen Position, die über das offene Oberteil die Einführung und Entnahme von Nahrungsmitteln gestattet; und (b) einer wirksamen Position, die über dem unteren elektrischen Heizkörper (20) beabstandet ist, um ein beschleunigtes Aufheizen der Ölmenge nach Aufnahme in den Behälter zu gestatten.

2. Das Gargerät gemäß Anspruch 1, wobei der untere elektrische Heizkörper horizontal über der Bodenwand des Behälters angebracht ist; und wobei das Gargerät ferner eine entfernbare hitzebeständige Platte umfasst, die auf dem unteren elektrischen Heizkörper getragen wird, um es dem Gargerät zu ermöglichen, einen weiteren Behälter zum Kochen von Nahrungsmitteln darin aufzunehmen.

3. Das Gargerät gemäß Anspruch 1 oder 2, wobei das Gargerät ferner einen Deckel umfasst, der selektiv beweglich ist, um das offene Oberteil des Behälters abzudecken oder aufzudecken; wobei der obere elektrische Heizkörper von dem Deckel getragen wird und damit in die unwirksame Position des oberen elektrischen Heizkörpers beweglich ist.

4. Das Gargerät gemäß Anspruch 3, wobei der Deckel entfernbar über dem offenen Oberteil des Behälters montiert ist und ferner einen elektrischen Stecker einschließt, der in einem Sockel aufnehmbar ist, der von dem Behälter für die Stromversorgung des oberen elektrischen Heizkörpers getragen wird, wenn der Deckel über dem offenen Oberteil des Behälters angebracht wird.

5. Das Gargerät gemäß Anspruch 4, wobei der untere elektrische Heizkörper in der Form einer separaten Einheit ist, die auf der oberen Kante der Behälter-Seitenwand entfernbar aufgenommen wird, und den Sockel zum Aufnehmen des Steckers in dem Deckel einschließt.

6. Das Gargerät gemäß Anspruch 3, wobei der Deckel über dem offenen Oberteil des Behälters drehbar montiert ist.

7. Das Gargerät gemäß Anspruch 3, wobei die Abdeckung ferner einen Reflektor einschließt, der den oberen elektrischen Heizkörper zum Reflektieren der Wärme davon in den Behälter unterstützt, wenn der obere elektrische Heizkörper unter Strom gesetzt wird.

8. Das Gargerät gemäß Anspruch 7, wobei der obere elektrische Heizkörper und der Reflektor von ringförmiger Konfiguration sind und der Deckel einen lichtdurchlässigen Abschnitt mittig von dem oberen elektrischen Heizkörper und dem Reflektor einschließt, um ein Betrachten der Inhalte des Behälters zu gestatten, während der Deckel das offene Oberteil des Behälters abdeckt.

9. Das Gargerät gemäß Anspruch 1 oder 2, wobei das Gargerät ferner einen Nahrungsmittel-Halter umfasst, der einen öldurchlässigen Korb zum Halten von zu frittierenden Nahrungsmitteln und Korb tragende Mittel zum selektiven Tragen des Korbes einschließt, und zwar entweder in einer oberen Position über der Ölmenge innerhalb des Behälters beabstandet oder in einer unteren Position den Korb und die Nahrungsmittel darin in die Ölmenge eintauchend.

10. Das Gargerät gemäß Anspruch 9, wobei die Korb tragenden Mittel folgendes einschließen:
einen Griff zur manuellen Handhabung des Korbes;
einen unteren Haken, der von dem Griff zum Tragen des Korbes in der oberen Position über der Ölmenge zum Vorheizen der Nahrungsmittel in dem Korb vor dem Eintauchen des Korbes und der Nahrungsmittel darin in die Ölmenge getragen wird; und
einen oberen Haken, der von dem Griff zum Tragen des Korbes in der unteren Position getragen wird, den Korb und die Nahrungsmittel darin in die Ölmenge in dem Behälter eintauchend.

11. Das Gargerät gemäß Anspruch 1, wobei der obere elektrische Heizkörper innerhalb des Behälters in die wirksame Position montiert wird, wobei er derart ausgerichtet ist, um sich horizontal parallel zu und beabstandet über dem unteren elektrischen Heizkörper zu erstrecken, oder in die unwirksame Position drehbar montiert wird, wobei er derart ausgerichtet ist, um sich vertikal durch das offene Oberteil des Behälters zu erstrecken.

12. Das Gargerät gemäß Anspruch 11, wobei das Gargerät einen Handbediener zum manuellen Drehen des oberen elektrischen Heizkörpers in die horizontale wirksame Position oder in die vertikale unwirksame Position einschließt.

13. Das Gargerät gemäß Anspruch 11, wobei der untere elektrische Heizkörper in der Form einer separaten Einheit ist, die auf der oberen Kante der Behälter-Seitenwand entfernbar aufgenommen wird, und ferner den oberen elektrischen Dreh-Heizkörper einschließt.

14. Das Gargerät gemäß Anspruch 9 oder 14, wobei die Korb tragenden Mittel einen Griff zur manuellen Handhabung des Korbes einschließen, wobei der Griff derart bemessen ist, dass er in das offene Oberteil des Behälters eingreifen kann, um den Korb in der unteren Position zu tragen; wobei die Korb tragenden Mittel ferner eine oder mehrere von dem Korb getragenen Klemmen einschließen, die in das offene Oberteil des Behälters zum Tragen des Korbes in der oberen Position in Eingriff bringbar sind.

15. Das Gargerät gemäß Anspruch 15, wobei der Griff ein Paar von Federarmen einschließt, das in ein Paar von beabstandeten Schultern eingreifen kann, das von dem Nahrungsmittel-Halter zum selektiven Anbringen oder Lösen des Griffs von dem Nahrungsmittel-Halter getragen wird.

16. Ein Verfahren zum Frittieren von Nahrungsmitteln, insbesondere Kartoffeln, unter Verwendung des Geräts aus Anspruch 1, das folgendes umfasst:
Eingießen von Frittieröl in den Behälter;
Aufheizen auf die Frittiertemperatur, indem der untere elektrische Heizkörper unter Strom gesetzt wird;
Einbringen der Nahrungsmittel in den öldurchlässigen Korb;
Bewegen des oberen elektrischen Heizkörpers in die unwirksame Position;
Einhängen des Korbes und der Nahrungsmittel darin beabstandet über dem heißen Frittieröl, um die Nahrungsmittel vorzuheizen und um ihre äußeren Oberflächen teilweise zu trocknen; und
anschließendes Absenken des Korbes, um die Nahrungsmittel in das heiße Öl einzutauchen, um **dadurch** frittierte Nahrungsmittel zu erzeugen, die eine verbesserte Knusprigkeit und eine verminderte Ölaufnahme aufweisen.

## Revendications

1. Appareil de cuisson particulièrement adapté à la grande friture d'aliments, comprenant : un réceptacle (10) ayant une paroi inférieure (11), une paroi latérale (12) et une partie supérieure ouverte (13) pour recevoir des aliments et une quantité d'huile pour la grande friture des aliments à l'intérieur de celui-ci ; un corps de chauffage électrique inférieur (20) à l'intérieur dudit réceptacle (10) adjacent à sa paroi inférieure (11) pour une immersion dans ladite quantité d'huile lorsqu'il est logé dans ledit réceptacle, **caractérisé en ce qu'**il comprend en outre un corps de chauffage électrique supérieur (30) pouvant se déplacer par rapport audit réceptacle, et audit corps de chauffage électrique inférieur à l'intérieur de celui-ci, vers (a) une position inopérationnelle permettant l'introduction et le retrait d'aliments via ladite partie supérieure ouverte ; et (b) une position opérationnelle espacée au-dessus dudit corps de chauffage électrique inférieur (20) pour permettre un chauffage accéléré de la quantité d'huile lorsqu'il est logé à l'intérieur du réceptacle.

2. Appareil de cuisson selon la revendication 1, dans lequel ledit corps de chauffage électrique inférieur est disposé horizontalement au-dessus de ladite paroi inférieure du réceptacle ; et dans lequel ledit appareil de cuisson comprend en outre une plaque amovible résistant à la chaleur supportée par ledit corps de chauffage électrique inférieur pour permettre à l'appareil de cuisson de recevoir un autre réceptacle pour cuire des aliments à l'intérieur de celui-ci.

3. Appareil de cuisson selon la revendication 1 ou 2, dans lequel l'appareil de cuisson comprend en outre un couvercle pouvant bouger de manière sélective pour couvrir ou découvrir ladite partie supérieure ouverte du réceptacle, ledit corps de chauffage électrique supérieur étant porté par ledit couvercle et étant déplaçable avec celui-ci vers ladite position inopérationnelle du corps de chauffage électrique supérieur.

4. Appareil de cuisson selon la revendication 3, dans lequel ledit couvercle est monté de manière amovible sur la partie supérieure ouverte dudit réceptacle et comprend en outre une fiche électrique pouvant être logée dans une prise de courant portée par ledit réceptacle pour alimenter en énergie ledit corps de chauffage électrique supérieur lorsque le couvercle est posé sur la partie supérieure ouverte dudit réceptacle.

5. Appareil de cuisson selon la revendication 4, dans lequel ledit corps de chauffage électrique inférieur est sous la forme d'une unité séparée logée de manière amovible sur le bord supérieur de la paroi latérale du réceptacle et comprend ladite prise de courant pour recevoir ladite fiche dans ledit couvercle.

6. Appareil de cuisson selon la revendication 3, dans lequel ledit couvercle est monté de manière pivotante sur la partie supérieure ouverte dudit réceptacle.

7. Appareil de cuisson selon la revendication 3, dans lequel ledit couvercle comprend en outre un réflecteur assistant ledit corps de chauffage électrique supérieur pour refléter la chaleur à partir de celui-ci dans ledit réceptacle lorsque le corps de chauffage électrique supérieur est alimenté en énergie.

8. Appareil de cuisson selon la revendication 7, dans lequel ledit corps de chauffage électrique supérieur et ledit réflecteur sont d'une configuration annulaire, et ledit couvercle comprend une section transparente à la lumière au centre dudit corps de chauffage électrique supérieur et du réflecteur pour permettre de voir les contenus du réceptacle lorsque le couvercle recouvre la partie supérieure ouverte du réceptacle.

9. Appareil de cuisson selon la revendication 1 ou 2, dans lequel l'appareil de cuisson comprend en outre un récipient d'aliments comprenant un panier perméable à l'huile pour contenir les aliments à frire, et des moyens de support de panier pour supporter de manière sélective ledit panier soit dans une position supérieure espacée au-dessus de la quantité d'huile dans le réceptacle, soit dans une position inférieure immergeant le panier et les aliments à l'intérieur de celui-ci dans la quantité d'huile.

10. Appareil de cuisson selon la revendication 9, dans lequel lesdits moyens de support de panier comprennent:
une poignée pour manipuler manuellement ledit panier ;
un crochet inférieur porté par ladite poignée pour supporter le panier dans ladite position supérieure au-dessus de ladite quantité d'huile pour préchauffer les aliments dans le panier avant d'immerger le panier et les aliments à l'intérieur de celui-ci dans la quantité d'huile ; et
un crochet supérieur porté par ladite poignée pour supporter le panier dans ladite position inférieure immergeant le panier et les aliments à l'intérieur de celui-ci dans la quantité d'huile dans le réceptacle.

11. Appareil de cuisson selon la revendication 1, dans lequel ledit corps de chauffage électrique supérieur est monté de manière pivotante à l'intérieur dudit réceptacle vers ladite position opérationnelle dans laquelle il est orienté pour s'étendre horizontalement de manière parallèle par rapport audit corps de chauffage électrique inférieur et en étant espacé au-dessus de celui-ci, ou vers la position inopérationnelle dans laquelle il est orienté pour s'étendre verticalement à travers la partie supérieure ouverte dudit réceptacle.

12. Appareil de cuisson selon la revendication 11, dans lequel l'appareil de cuisson comprend un opérateur manuel pour pivoter manuellement ledit corps de chauffage électrique supérieur vers ladite position opérationnelle horizontale ou vers ladite position inopérationnelle verticale.

13. Appareil de cuisson selon la revendication 11, dans lequel ledit corps de chauffage électrique inférieur est sous la forme d'une unité séparée logée de manière amovible sur le bord supérieur de la paroi latérale du réceptacle et comprend aussi ledit corps de chauffage électrique supérieur pivotant.

14. Appareil de cuisson selon la revendication 9 ou 14, dans lequel lesdits moyens de support de panier comprennent une poignée pour manipuler manuellement ledit panier, ladite poignée étant dimensionnée de manière à pouvoir entrer en prise avec la partie supérieure ouverte dudit réceptacle pour supporter ledit panier dans ladite position inférieure ; lesdits moyens de support de panier comprenant en outre une ou plusieurs attaches portées par ledit panier pouvant entrer en prise avec la partie supérieure ouverte dudit réceptacle pour supporter ledit panier dans ladite position supérieure.

15. Appareil de cuisson selon la revendication 15, dans lequel ladite poignée comprend une paire de bras à ressort pouvant entrer en prise avec une paire d'épaulements espacés portés par ledit récipient d' aliments pour fixer ou détacher de manière sélective ladite poignée dudit récipient d'aliments.

16. Procédé de grande friture d'aliments, en particulier de pommes de terre, utilisant l'appareil de la revendication 1, comprenant les étapes consistant à :
verser de l'huile de friture dans le réceptacle ;
chauffer à la température de friture en alimentant en énergie le corps de chauffage électrique inférieur ;
disposer lesdits aliments dans le panier perméable à l'huile ;
déplacer le corps de chauffage électrique supérieur vers la position inopérationnelle ;
suspendre ledit panier et les aliments à l'intérieur de celui-ci au-dessus de l'huile de friture brûlante pour préchauffer lesdits aliments et partiellement sécher leurs surfaces extérieures ; et
abaisser ensuite ledit panier pour immerger lesdits aliments dans ladite huile brûlante, pour produire ainsi des aliments frits ayant un croustillant renforcé et une absorption d'huile réduite.
